# EUROPÄISCHE PATENTSCHRIFT

(11) **EP 2 864 797 B1**
(45) Veröffentlichungstag und Bekanntmachung des Hinweises auf die Patenterteilung: **01.01.2020**
(21) Anmeldenummer: 13727520.2
(22) Anmeldetag: 03.06.2013
(51) Int. Cl.: G01P 1/00, G01P 1/02, G01P 3/487, G01P 3/488, B60T 8/171

(54) **BREMSANLAGE UND FAHRZEUG DAMIT SOWIE BREMSVERFAHREN**
BRAKE SYSTEM, VEHICLE THEREWITH AND BRAKING METHOD
SYSTÈME DE FREINAGE ET VÉHICULE AINSI ÉQUIPÉ, ET PROCÉDÉ DE FREINAGE

(30) Priorität: 21.06.2012 DE 102012012384
(43) Veröffentlichungstag der Anmeldung: 29.04.2015
(73) Patentinhaber: WABCO GmbH, 30453 Hannover (DE)
(72) Erfinder: DALISDAS, Jürgen, 30627 Hannover (DE); GRÜNDKER, Oliver, 30900 Wedemark (DE); HÖFLER, Siegfried, 30165 Hannover (DE)
(74) Vertreter: Lauerwald, Jörg
(86) Internationale Anmeldenummer: PCT/EP2013/001617
(87) Internationale Veröffentlichungsnummer: WO 2013/189567

(56) Entgegenhaltungen:
- DE-A1- 3 229 207
- DE-A1-102008 054 000
- DE-A1-102010 049 282
- JP-A- 2000 097 960
- JP-A- 2000 097 960
- JP-A- 2003 146 196
- JP-A- 2003 146 196
- US-A1- 2006 230 822
- US-A1- 2006 230 822
- US-A1- 2007 103 145
- US-A1- 2007 103 145

## Beschreibung

Die Erfindung betrifft eine Bremsanlage zur Drehzahlmessung an einem Rad eines Fahrzeugs. Eine Sensorvorrichtung weist einen Sensorträger mit einem Sensor auf. Der Sensorträger ist im Bereich des Rades klemmbar zum Abtasten der Drehung eines mit dem Rad mitdrehenden Polrades mittels des Sensors zur Drehzahlmessung. Die Sensorvorrichtung ist insbesondere ein Stabsensor und der Sensorträger insbesondere ein Stab. Der Sensorträger ist insbesondere in einer Halteöffnung bzw. Klemmvorrichtung, beispielsweise in einem Bohrloch bzw. in einer Bohrung, in einem Sensorhalter oder in einer Hülse, die ggf. in einer weiteren Halteöffnung gelagert ist, klemmbar. Die Erfindung betrifft eine Bremsanlage mit der Sensorvorrichtung sowie ein Fahrzeug damit. Schließlich betrifft die Erfindung ein Bremsverfahren.
Eine derartige erste Sensorvorrichtung, wie beispielsweise aus EP 0 092 605 B2 bekannt, ist als Stabsensor ausgebildet, weist einen passiven Sensor auf und wird zur passiven Drehzahlmessung mittels Induktion in Bremsanlagen von Nutzfahrzeugen eingesetzt. Bei der Montage wird der Stab dieses bekannten Stabsensors bis zum Kontakt mit dem Polrad in die Halteöffnung bzw. durch die Halteöffnung geschoben und mittels einer Klemmbuchse in der Halteöffnung gehalten. Das Messprinzip des Stabsensors über Induktion ermöglicht ein lageunabhängiges Anbringen des Sensorträgers in der Halteöffnung bezogen auf Drehungen des Sensorträgers um die Stabachse des Stabes. Dieser bekannte Stabsensor lässt sich daher ohne aufwendige Einstellarbeiten und somit mit geringem Aufwand verbauen. Nachteilig ist jedoch, dass eine messbare und auswertbare Wechselspannung im passiven Sensor nur dann induziert wird, wenn sich das Polrad relativ zum Stabsensor dreht. Die Amplitude der Wechselspannung ist darüber hinaus von der Drehgeschwindigkeit des Polrades abhängig, so dass geringe Drehgeschwindigkeiten, die zu einer für die Drehzahlmessung unzureichenden Amplitude führen, nicht erfasst werden können.

DE 32 29 207 A1 zeigt beispielsweise eine Klemmbuchse zum Halten eines Stabsensors in einer Halteöffnung, wobei die Klemmboxer mehrere achsparallele federnde Zungen aufweist. Die Zungen dienen zur reibschlüssigen Fixierung und Justierung des Sensors in einer Buchung bzw. Halteöffnung eines Halteteils.

Darüber hinaus ist eine grundlegend andersartige, zweite Sensorvorrichtung bekannt, die in Bremsanlagen an vergleichsweise kleineren oder leichteren Fahrzeugen, insbesondere Personenwagen, eingesetzt wird, und einen aktiven Sensor aufweist, bekannt. Diese zweite Sensorvorrichtung kann dank des aktiven Sensors auch Messwerte liefern, wenn das Polrad sich sehr langsam dreht oder sogar stillsteht. Allerdings liefert diese zweite Sensorvorrichtung nur dann Messwerte oder ausreichend gute und verlässliche Messwerte, wenn bei der Montage der aktive Sensor in einer genau definierten Lage relativ zum Polrad angeordnet wird. Die zweite Sensorvorrichtung bzw. ein Sensorträger mit dem aktiven Sensor wird daher beispielsweise mittels eines Schraubflansches befestigt und exakt zum Polrad ausgerichtet. Die Montage der zweiten Sensorvorrichtung erfordert daher aufwendige Einstellarbeiten und ist somit umständlich und teuer.

DE 10 2008 054 000 A1 zeigt einen aktiven orientierungsabhängigen Impulsdrehzahlgeber, welcher in einer elastischen Klemmhülse kraftschlüssig in einer Bohrung angeordnet ist, wobei die Klemmhülse einen Presssitz des zylindrischen Sensorkopfes des Impulsdrehzahlgeber bildet. Die Klemmhülse oder der Impulsdrehzahlgeber weisen eine Verdrehsicherung auf, die eine axiale Verschiebung des Sensorkopfes in der Klemmhülse gegenüber eines Rotors unter Beibehaltung der radialen Ausrichtung bzw. Orientierung des Sensorkopfes gegenüber des Rotors ermöglicht.

DE 10 2010 049282 A1 zeigt einen Wälzlagersensor, welcher mittels einer oder mehrerer Konuselementen durch Klemmkräfte in einer Aufnahme befestigt ist. Während des Befestigungsvorgangs sind Mittel vorgesehen, mit denen der Wälzlagersensor mit den Konuselementen gegen Verdrehen gesichert ist.

Die Schriften JP 2003146196 A, JP 2000097960 A, US 2007/103145 A1, US 2006/230822 A1 offenbaren Drehzahlsensoren.

Der Erfindung liegt nach alledem die Aufgabe zugrunde, eine Messung von Raddrehzahlen auch bei langsam drehendem Rad zuverlässig zu ermöglichen bei einfacher Montage der hierfür notwendigen Vorrichtung, insbesondere ohne aufwendige Einstellarbeiten.

Die Erfindung löst diese Aufgabe mit einer Bremsanlage nach Anspruch 1, mit einem Fahrzeug nach Anspruch 5 und mit einem Bremsverfahren nach Anspruch 7.

Die erfindungsgemäße Bremsanlage für ein Fahrzeug weist die Merkmale des Anspruchs 1 auf.

Die Bremsanlage weist zudem mehrere Bremsen zum Abbremsen und/oder Feststellen von Rädern des Fahrzeugs sowie insgesamt mehrere Sensorvorrichtungen auf, von denen wenigstens eine Sensorvorrichtung gemäß der Sensorvorrichtung ausgebildet ist. Ferner weist die Bremsanlage vorzugsweise eine signalübertragend mit den Sensorvorrichtungen verbundene Bremselektronik zur Steuerung und/oder Regelung der Bremsen unter Berücksichtigung von Signalen von der Sensorvorrichtung auf. Die Erfindung kann somit für automatische Bremseingriffe, beispielsweise mittels eines Antiblockiersystems (ABS) oder bei einem elektronischen Bremssystem (EBS) eingesetzt werden.

Die Bremsanlage bzw. das Bremsverfahren weist wenigstens eine Sensorvorrichtung der Bremsanlage einen passiven, insbesondere induktiven, Sensor auf bzw. tastet ein Sensor wenigstens einer der Sensorvorrichtungen als passiver, insbesondere induktiver, Sensor die Drehung des Polrades passiv ab. Es liegt somit ein Mischsystem aus aktiven und passiven Sensoren vor, was insbesondere aus Kostengründen vorteilhaft sein kann. Es mag nämlich vorteilhaft sein, lediglich an einzelnen Rädern und/oder Achsen die Drehgeschwindigkeit von Rädern auch bei langsamer Geschwindigkeit bzw. im Stillstand zu ermitteln. Eine Messung der Drehgeschwindigkeiten aller Räder bei langsamer Geschwindigkeit oder im Stillstand kann dabei entbehrlich sein. Die Geschwindigkeitsmessung mittels des aktiven Sensors an wenigstens einem Rad bei langsamer Geschwindigkeit kann dabei beispielsweise zur Unterstützung der Navigation in Verbindung mit einem satellitengestützten Navigationssystem dienen, um beispielsweise Ortsänderungen bei Rangierfahrten auf einem Parkplatz zu erfassen.

Das erfindungsgemäße Fahrzeug weist die erfindungsgemäße Bremsanlage auf.

Die Erfindung ordnet in einem zur Sensorvorrichtung gehörenden Sensorträger, der zum Abtasten der Drehung eines mit dem Rad mitdrehenden Polrades im Bereich dieses Rades klemmbar ist, einen aktiven Sensor zum aktiven Abtasten dieser Drehung bzw. zur Drehzahlmessung an. Unter einem aktiven Sensor ist vorliegend ein Sensor zu verstehen, der eine Versorgungsspannung bzw. Hilfsspannung benötigt. Im Gegensatz zu einem passiven Sensor kann der aktive Sensor nicht ohne eine Hilfsspannung ein Signal erzeugen. Insbesondere weist der aktive Sensor passive Aufnehmer und eine Primärelektronik auf, die zur Auswertung der in Abhängigkeit von der Stellung des Polrades zu den passiven Aufnehmern veränderbaren elektrischen Eigenschaften der passiven Aufnehmer eine Hilfsspannung benötigt. Unter einem aktiven Abtasten ist vorliegend ein Abtasten unter Nutzung einer Hilfsspannung zu verstehen.

Ferner ist der Sensorträger mit dem Sensor lageunabhängig in Bezug auf Drehungen um die Sensorträgerachse in der Halteöffnung klemmbar.

Die Erfindung weist sowohl die Vorteile der eingangs genannten bei Nutzfahrzeugen eingesetzten ersten Sensorvorrichtung als auch die Vorteile der ebenfalls eingangs genannten, bei Personenwagen eingesetzten zweiten Sensorvorrichtung auf. Die erfindungsgemäße Sensorvorrichtung kann einfach montiert werden und hiernach zuverlässig auch geringe Drehzahlen oder den Stillstand des Polrades und damit des zugeordneten Rades des Fahrzeugs erfassen.

Die Erfindung ist sowohl für Nutzfahrzeuge bzw. Lastkraftwagen als auch für Personenkraftwagen einsetzbar. Im Bereich der Nutzfahrzeuge bzw. Lastkraftwagen können vorhandene Halteeinrichtungen für Sensorvorrichtungen mit passiven Sensoren auch für die erfindungsgemäße Sensorvorrichtung weiter verwendet werden. Teure Umrüstungen oder Neuentwicklungen im Falle der Erstmontage sind daher nicht erforderlich. Insbesondere kann die erfindungsgemäße Sensorvorrichtung in der gleichen bzw. in einer gleichartigen Halteöffnung aufgenommen werden wie die eingangs genannte erste Sensorvorrichtung mit dem passiven Sensor. Die Sensorvorrichtung ist dabei vorzugsweise ein Stabsensor und der Sensorträger vorzugsweise ein Stab. Vorzugsweise umfasst der Stabsensor zusätzlich zum Stab ein mit dem Stab verbundenes Anschlusskabel, über welches der aktive Sensor mit elektrischer Energie versorgt wird und über welches Messsignale bzw. Messwerte der Drehzahlmessung bereitgestellt werden können.

Die Sensorvorrichtung kann axial oder radial zum Polrad angeordnet werden. Ein Anschluss des Kabels an den Stab ist daher vorzugsweise an die axiale oder die radiale Anordnung des Stabes relativ zum Polrad angepasst.

Gemäß einer vorteilhaften Ausführungsform ist der Sensorträger bzw. der Stab mittels einer Klemmbuchse im Bereich des Rades, insbesondere in der genannten Halteöffnung klemmbar. Die Halteöffnung ist vorzugsweise eine Bohrung oder mittels eines Sensorhalters gegeben. Die Klemmbuchse ermöglicht ein einfaches Montieren der Sensorvorrichtung sowie ein automatisches Einstellen eines nicht zu großen Abstands zum Polrad durch möglichen Kontakt des Polrades zum Sensorträger durch Lagerspiel des Rades.

Gemäß der Erfindung ist der Sensorträger bzw. Stab längs seiner Sensorträgerachse bzw. Stabachse verschiebbar im Bereich des Rades klemmbar. Dadurch wird der Sensorträger einerseits sicher gehalten. Andererseits kann der Sensorträger leicht in die Halteöffnung eingebracht und durch das Lagerspiel des Rades auf einen ausreichenden Abstand zum Polrad eingestellt werden.

Gemäß der Erfindung ist der Sensorträger zum Abtasten der Drehung des Polrades radialsymmetrisch um die Sensorträgerachse ausgebildet und somit lageunabhängig in Bezug auf Drehungen um die Sensorträgerachse bzw. Stabachse, insbesondere in der Halteöffnung, klemmbar. Die Sensorvorrichtung kann daher in beliebiger Lage in die Halteöffnung eingesteckt werden und ist folglich ohne großen Aufwand zu montieren. Aufschlussreiche Messwerte werden unabhängig von der Lage des Sensorträgers in der Halteöffnung erhalten.

Vorteilhafterweise ist der aktive Sensor ein Hall-Sensor bzw. Hall-Effekt-Sensor bzw. Halldifferenzsensor zum Abtasten der Drehung des Polrades unter Nutzung des Hall-Effektes. Der Hall-Sensor ermöglicht eine berührungsfreie Messung über ein messbares Potentialgefälle, das sich in Abhängigkeit von der Position des Polrades relativ zum aktiven Sensor, insbesondere in Abhängigkeit davon, ob sich gerade ein Zahn des Polrades oder eine zwischen zwei Zähnen befindliche Lücke vor dem aktiven Sensor befindet, einstellt.

Gemäß einer alternativen Ausführungsform ist der aktive Sensor ein Magnetfeldsensor, insbesondere ein sog. GMR (giant magnetoresistance)-Sensor bzw. Riesenmagnetowiderstand-Sensor. Der GMR-Sensor nutzt den sog. GMR-Effekt, der ein quantenmechanischer Effekt ist. Dabei bewirken Variationen des Magnetfelds, die durch Positionsänderungen bzw. die Drehung des Polrades verursacht werden, messbare Änderungen des elektrischen Widerstandes einer hierfür vorgesehenen Struktur im Sensor.

Gemäß einer bevorzugten Ausführungsform weist der aktive Sensor, insbesondere drei oder wenigstens drei, passive Aufnehmer auf, deren elektrische Eigenschaften in Abhängigkeit von einem durch die Stellung des Polrades zu den passiven Aufnehmern beeinflussbaren Magnetfeld an den passiven Aufnehmern veränderlich und zur Drehzahlmessung auswertbar sind. Dank der passiven Aufnehmer ist eine Messung auch bei stehendem oder langsam drehendem Polrad möglich.

Gemäß einer bevorzugten Ausführungsform sind die passiven Aufnehmer in zueinander unterschiedlichen Richtungen zur Messung des Magnetfeldes an unterschiedlichen Stellen angeordnet. Insbesondere sind, jeweils in Bezug auf einen ersten passiven Aufnehmer, ein zweiter und ein dritter Aufnehmer in zueinander unterschiedlichen Richtungen versetzt gegenüber dem ersten passiven Aufnehmer in einer Ebene mit dem ersten passiven Aufnehmer angeordnet. Auf diese Weise können Unterschiede des Magnetfelds bzw. der magnetischen Flussdichte unabhängig von der Lage des aktiven Sensors zum Polrad vollständig erfasst werden. Eine Differenz des gemessenen Magnetfelds bzw. der gemessenen magnetischen Flussdichten kann selbst dann ermittelt werden, wenn zwei der Aufnehmer zufällig ungünstig zueinander ausgerichtet sind, so dass mittels dieser Aufnehmer keine unterschiedliche Flussdichte des Magnetfeldes messbar ist.

Gemäß einer vorteilhaften Ausführungsform ist der aktive Sensor zur Erzeugung eines gemeinsamen Signals aus den elektrischen Eigenschaften der passiven Aufnehmer ausgebildet, wobei dieses Signal zur Drehzahlmessung ausgewertet werden kann. Es wird somit ein Signal errechnet, das vorzugsweise dem Signal gleicht, welches erhalten werden würde, wenn lediglich ein Differenzsignal aus zwei optimal in ihrer Lage zum Polrad ausgerichteten bzw. in der lokalen Bewegungsrichtung des Polrades gegeneinander versetzten Aufnehmern bestimmt werden würde.

Gemäß einer bevorzugten Ausführungsform weist das Fahrzeug wenigstens eine erste Achse, insbesondere Vorderachse, mit wenigstens einem ersten Rad, insbesondere Vorderrad, auf, in dessen Bereich ein Sensorträger einer erfindungsgemäßen Sensorvorrichtung mit einem aktiven Sensor angeordnet ist. Ferner weist das Fahrzeug vorzugsweise wenigstens eine zweite Achse, insbesondere Hinterachse, mit wenigstens einem zweiten Rad, insbesondere Hinterrad, auf, in dessen Bereich ein weiterer Sensorträger einer weiteren Sensorvorrichtung mit einem passiven Sensor angeordnet ist. Ggf. reicht es aus, an der ersten Achse die Drehzahl wenigstens eines Rades und somit die daraus ableitbare Fahrgeschwindigkeit des Fahrzeugs zu messen, wohingegen an der zweiten Achse die Sensorvorrichtung mit dem passiven Sensor verbaut ist. Im Falle einer Aufrüstung eines bereits mit passiven Sensoren bestückten Fahrzeugs reicht es somit aus, an der ersten Achse die Sensorvorrichtungen mit den passiven Sensoren durch Sensorvorrichtungen mit aktiven Sensoren zu ersetzen.

Ein Ersetzen einer herkömmlichen Sensorvorrichtung mit einem passiven Sensor durch die Sensorvorrichtung mit dem aktiven Sensor ist leicht möglich, da vorzugsweise diese beiden Sensorvorrichtungen die gleiche oder eine ähnliche Form des jeweiligen Sensorträgers aufweisen und daher alternativ in der selben hierfür vorgesehenen Halteöffnung, insbesondere mittels der Klemmvorrichtung, jeweils lageunabhängig verbaut werden können.

Der passive Sensor der für die Mischbestückung vorgesehenen Sensorvorrichtung weist vorzugsweise einen aktiven Aufnehmer auf, der aus einem durch die Drehung des Polrades am aktiven Aufnehmer vorliegenden magnetischen Wechselfeld eine elektrische Wechselspannung erzeugen kann, die zur Drehzahlmessung ausgewertet werden kann.

Weitere vorteilhafte Ausführungsformen ergeben sich aus den Ansprüchen sowie aus der nachfolgend beschriebenen Zeichnung. In der Zeichnung zeigen:
- Fig. 1: Ein Fahrzeug, das eine Bremsanlage mit Sensoreinrichtungen im Bereich seiner Räder aufweist gemäß einem Ausführungsbeispiel der Erfindung in vereinfachter Darstellung;
- Fig. 2: die Sensoreinrichtung des Ausführungsbeispiels gemäß Fig. 1 mit neben einem Polrad geklemmtem Sensorträger in einer Schnittdarstellung;
- Fig. 3: ein Blockschaltbild eines vereinfacht dargestellten Bremsverfahrens mit einem vom Bremsverfahren umfassten Messverfahren gemäß einem Ausführungsbeispiel der Erfindung.

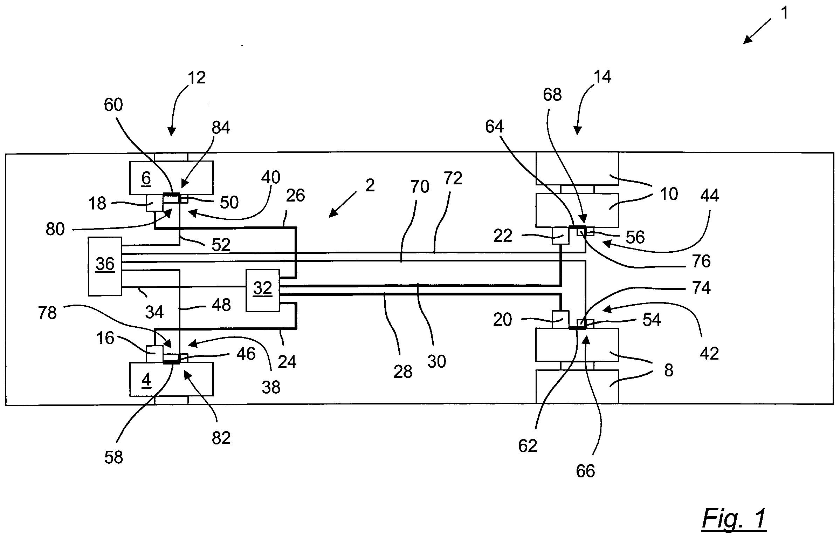

Fig. 1 zeigt ein Fahrzeug 1 gemäß einem Ausführungsbeispiel der Erfindung. Das Fahrzeug 1 ist beispielhaft als Nutzfahrzeug und als Straßenfahrzeug ausgebildet. Insbesondere ist das Fahrzeug 1 ein Kraftfahrzeug, welches einen nicht dargestellten eigenen Antrieb, beispielsweise einen Verbrennungsmotor, aufweist.

Das Fahrzeug 1 weist eine pneumatische Bremsanlage 2 zum Abbremsen bzw. Feststellen von Rädern 4, 6, 8 und 10 des Fahrzeugs 1 auf. Die Erfindung ist jedoch auch für hydraulische Bremsanlagen geeignet. Das Rad 4 ist ein linkes Vorderrad, das Rad 6 ein rechtes Vorderrad, das Rad 8 ein als Zwillingsreifen ausgebildetes linkes Hinterrad und das Rad 10 ein als Zwillingsreifen ausgebildetes rechtes Hinterrad. Die Vorderräder 4 und 6 sind an einer ersten Achse 12, die eine Vorderachse ist, und die Hinterräder 8 und 10 an einer zweiten Achse 14, die eine Hinterachse ist, angeordnet. Zum Abbremsen bzw. Feststellen der Räder 4 bis 10 ist am linken Vorderrad 4 eine erste Bremse 16, am rechten Vorderrad 6 eine zweite Bremse 18, am linken Hinterrad 8 eine dritte Bremse 20 und am rechten Hinterrad 10 eine vierte Bremse 22 angeordnet. Die Bremsen 16 bis 22 sind über eine erste Druckluftleitung 24, eine zweite Druckluftleitung 26, eine dritte Druckluftleitung 28 und eine vierte Druckluftleitung 30 mit einem Bremsmodulator 32 pneumatisch verbunden.

Mittels des Bremsmodulators 32 kann ein Bremsdruck für die einzelnen Bremsen 16 bis 22 ausgesteuert und/oder gegenüber einem, beispielsweise manuell ausgesteuerten, Bremsdruck mittels elektrisch ansteuerbarer Ventileinrichtungen verändert werden. Der Bremsmodulator 32 wird hierfür über eine Steuerleitung 34 von einer Bremselektronik 36 angesteuert. Die Bremselektronik 36 verarbeitet erfasste Raddrehzahlen der Räder 4 bis 12 und berücksichtigt diese Raddrehzahlen bei der Ansteuerung des Bremsmodulators 32. Insbesondere erkennt die Bremselektronik 36 anhand der Raddrehzahlen beispielsweise eine Blockierneigung eines der Räder 4 bis 12 und senkt in Erwiderung darauf den Bremsdruck am betreffenden Rad 4 bis 12. Die erfassten Raddrehzahlen der Räder 6 bis 12 können darüber hinaus für weitere Anwendungen zur Verfügung stehen, beispielsweise die Positionsbestimmung des Fahrzeugs 1 in Ergänzung zu einem satellitengestützten Navigationssystem verbessern, wenn das Fahrzeug 1 sich in einer erkannten Bewegungsrichtung in einer aus den Raddrehzahlen ermittelten Entfernung bewegt.

Für die Raddrehzahlmessung weist die Bremsanlage 2 eine erste Sensorvorrichtung 38, eine zweite Sensorvorrichtung 40, eine dritte Sensorvorrichtung 42 und eine vierte Sensorvorrichtung 44 auf. Die Sensorvorrichtungen 38 bis 44 sind jeweils als Stabsensor ausgebildet. Die erste Sensorvorrichtung 38 umfasst einen als Stab ausgebildeten ersten Sensorträger 46, der im Bereich des linken Vorderrades 4 angeordnet ist, und ein erstes Anschlusskabel 48, über welches Signale bzw. Daten der ersten Sensorvorrichtung 38 an die Bremselektronik 36 übermittelt werden können. Entsprechend weist die zweite Sensorvorrichtung 40 einen als Stab ausgebildeten zweiten Sensorträger 50 im Bereich des rechten Vorderrades 6 sowie ein mit der Bremselektronik 36 verbundenes zweites Anschlusskabel 52 auf. Im Bereich des linken Hinterrades 8 ist ein als Stab ausgebildeter dritter Sensorträger 54 der dritten Sensorvorrichtung 42 und im Bereich des rechten Hinterrades 10 ein als Stab ausgebildeter vierter Sensorträger 56 der vierten Sensorvorrichtung 44 angeordnet.

Unter der Anordnung des Sensorträgers 46, 50, 54, 56 im Bereich des Rades 4, 6, 8, 10 ist vorliegend eine Anordnung zu verstehen, bei der der Abstand des jeweiligen Sensorträgers 46, 50, 54, 56 zu einem am jeweiligen Rad 4, 6, 8, 10 angeordneten Polrad 58, 60, 62, 64 maximal 30 mm, bevorzugt maximal 10 mm, besonders bevorzugt maximal 3 mm, ganz besonders bevorzugt bis zu 1 mm, beträgt. Die Polräder 58 bis 64 drehen zusammen mit den Rädern bis 10, so dass durch Ermittlung der Drehgeschwindigkeit des jeweiligen Polrades 58 bis 64 auf die Drehgeschwindigkeit des zugeordneten Rades 4 bis 10 und über den Umfang des jeweiligen Rades 4 bis 10 somit auch auf eine zurückgelegte Wegstrecke geschlossen werden kann.

Die Polräder 58 bis 64 weisen im Wechsel Erhöhungen und Vertiefungen bzw. Zähne und Lücken auf bzw. sind gezahnt. Ferner bestehen die Polräder 58 bis 64 aus einem ferromagnetischen Material, so dass unter Ausnutzung der Tatsache, dass sich magnetische Eigenschaften in Abhängigkeit von der Stellung des Polrades 58 bis 64 zum Sensorträger 46, 50 ,54, 56 verändern, die Position und/oder eine Bewegung des Polrades 58 bis 64 mittels der Sensorvorrichtung 38 bis 44 erkannt werden kann.

Der dritte Sensorträger 54 der dritten Sensorvorrichtung 42 weist einen ersten passiven Sensor 66 und der vierte Sensorträger 56 der vierten Sensorvorrichtung 44 einen zweiten passiven Sensor 68 zur passiven Drehzahlmessung mittels magnetischer Induktion auf. Sensorsignale werden vom ersten passiven Sensor 66 über ein drittes Anschlusskabel 70 und vom zweiten passiven Sensor 68 über ein viertes Anschlusskabel 72 an die Bremselektronik 36 übertragen. Der dritte Sensorträger 54 bzw. der vierte Sensorträger 56 wird in einem ersten Sensorhalter 74 bzw. zweiten Sensorhalter 76 vor dem jeweiligen Polrad 62 bzw. 64 im Bereich des Hinterrades 8 bzw. 10 gehalten bzw. ist im ersten Sensorhalter 74 bzw. zweiten Sensorhalter 76, insbesondere durch Bereitstellung einer Halteöffnung bzw. einer Klemmvorrichtung mittels des Sensorhalters 74, 76, geklemmt.

Der erste Sensorträger 46 und der zweite Sensorträger 50 sind in einer Halteöffnung bzw. Klemmvorrichtung 78 bzw. 80 vor dem ersten Polrad 58 bzw. zweiten Polrad 60 im Bereich des linken Vorderrades 4 bzw. rechten Vorderrades 6 geklemmt. Der erste Sensorträger 46 bzw. der zweite Sensorträger 50 weist einen ersten aktiven Sensor 82 bzw. zweiten aktiven Sensor 84 auf. Im Unterschied zu den passiven Sensoren 66 und 68 benötigen die aktiven Sensoren 82 und 84 zur Drehzahlmessung eine Hilfsspannung, die durch das erste Anschlusskabel 48 bzw. zweite Anschlusskabel 52 bereitgestellt wird. Die Löcher 78 und 80 könnten in Abweichung vom Ausführungsbeispiel der Erfindung prinzipiell auch mit Sensorträgern gemäß dem dritten Sensorträger 54 bzw. vierten Sensorträger 56 bestückt sein und somit passive Sensoren aufweisen. Dank der aktiven Sensoren in den Sensorträgern 46 und 50 ist es jedoch möglich, auch geringere Drehzahlen, die von den passiven Sensoren 66, 68 nicht mehr erfasst werden können, mittels der ersten Sensorvorrichtung 38 bzw. zweiten Sensorvorrichtung 40 zu erfassen.

Die Anordnung gemäß Fig. 1 kann dadurch erreicht werden, dass bei einem bekannten Fahrzeug bzw. einer bekannten Bremsanlage Sensorträger mit passiven Sensoren an der Vorderachse 12 durch die Sensorvorrichtungen 38 und 40 mit den aktiven Sensoren 82 und 84 durch einfachen Austausch ersetzt werden. Die dritte Sensorvorrichtung 42 und die vierte Sensorvorrichtung 44 könnten zwar ebenfalls durch alternative Sensorvorrichtungen mit aktiven Sensoren ersetzt werden. Die Mischbestückung hat jedoch Kostenvorteile, die in vielen Fällen ohne entscheidende Nachteile einhergehen, da die exakte Ermittlung von Raddrehzahlen bei geringen Drehzahlen an lediglich einer Achse, insbesondere der Vorderachse 12, oftmals ausreichend ist.

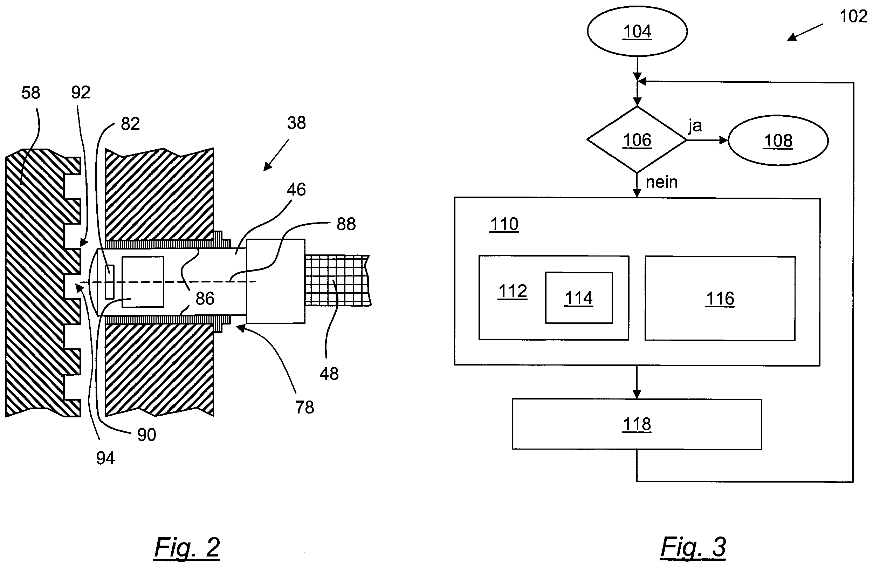

Fig. 2 zeigt die erste Sensorvorrichtung 38 des Ausführungsbeispiels gemäß Fig. 1 mit dem in der Halteöffnung 78 geklemmten ersten Sensorträger 46 und mit dem ansatzweise dargestellten ersten Anschlusskabel 48. Der erste Sensorträger 46 bzw. Stab ist mittels einer Klemmbuchse 86 derart in der Halteöffnung 78 geklemmt, dass der erste Sensorträger 46 gegen eine klemmende Kraft längs einer Sensorträgerachse 88 in die Halteöffnung 78 bis zum Kontakt mit dem ersten Polrad 58 eingeschoben werden kann und bei ersten Drehungen des ersten Polrades 58 durch Lagerspiel der ersten Achse 12, an der das linke Vorderrad 4 und das erste Polrad 58 befestigt sind, durch Kontakt des Polrades 58 mit dem ersten Sensorträger 46 gegen diese klemmende Kraft geringfügig zurückgedrückt wird, so dass der erste Sensorträger 46 nachfolgend in einem Abstand von weniger als 1 mm oder in einem Abstand von wenigen Millimetern zum ersten Polrad 58 mittels der Klemmbuchse 86 gehalten wird.

Der erste Sensorträger 46 bzw. Stab kann in beliebiger Lage bzw. Iageunabhängig in Bezug auf Drehungen um die Sensorträgerachse 88 bzw. Stabachse in der Halteöffnung 78 geklemmt sein. Der erste Sensorträger 46 ist, insbesondere auch für eine vorteilhafte Klemmwirkung mittels der Klemmbuchse 86, vorzugsweise radialsymmetrisch um die Sensorträgerachse 88 ausgebildet. Eine Drehzahlmessung mittels des ersten aktiven Sensors 82 ist in jedem Fall möglich, so dass auf aufwendige Justierarbeiten verzichtet werden kann.

In den ersten Sensorträger 46 ist ein Magnet 90 integriert, dessen Magnetfeld auch im Bereich des ersten aktiven Sensors 82 durch die jeweilige Position des ersten Polrades 58 beeinflusst wird. Insbesondere ist die magnetische Flussdichte im Bereich der Zähne, beispielsweise im Bereich eines Zahnes 92, gegenüber den dazwischen angeordneten Lücken, beispielsweise einer Lücke 94 vergleichsweise erhöht.

Der erste aktive Sensor 82 ist als Hall-Sensor bzw. Hall-Effekt-Sensor ausgebildet. Dabei erfolgt die Messung der magnetischen Flussdichte parallel zur Sensorträgerachse 88 dadurch, dass ein elektrischer Strom senkrecht zur Sensorträgerachse 88 geführt und ein sich durch das Magnetfeld einstellendes Potentialgefälle senkrecht zur Sensorträgerachse 88 und senkrecht zur elektrischen Stromrichtung gemessen wird.

Der zweite Sensorträger 50 des Ausführungsbeispiels gemäß Fig. 1 ist auf gleiche Weise im Bereich des rechten Vorderrades 6 geklemmt. Die Drehzahlmessung mittels des zweiten aktiven Sensors 84 erfolgt entsprechend.

Fig. 3 zeigt beispielhaft und vereinfacht dargestellt ein Blockschaltbild eines Bremsverfahrens 102, welches in einem Schritt 104 startet und, falls das Bremsverfahren 102 gemäß einer Abfrage 106 beendet werden soll, in einem Schritt 108 endet. Andernfalls folgt das Ermitteln von Raddrehzahlen mittels eines Messverfahrens gemäß einem Schritt 110. Das Messverfahren 110 beinhaltet ein aktives Abtasten der Position bzw. Drehung des jeweiligen Polrades 58, 60, 62, 64 gemäß einem Schritt 112. Im Schritt 112 ist ein Auswerten der elektrischen Eigenschaften von passiven Aufnehmern gemäß einem Schritt 114 enthalten. Zusätzlich zum Schritt 112 beinhaltet das Messverfahren 110 optional einen Schritt 116, gemäß dem auf traditionelle Weise, nämlich passiv die Drehung eines jeweiligen Polrades mittels eines passiven Sensors abgetastet wird. An wenigstens einem der Räder 4, 6, 8, 10 wird somit aktiv und an wenigstens einem anderen der Räder 4, 6, 8, 10 passiv die Drehung des jeweiligen Polrades 58, 60, 62, 64 und somit des zugeordneten Rades 4, 6, 8, 10 abgetastet.

Auf das Messverfahren 110 folgt ein Steuern bzw. Regeln der Bremsen 16, 18, 20, 22 in Abhängigkeit von mittels des Messverfahrens 110 ermittelten Raddrehzahlen gemäß einem Schritt 118. Die Raddrehzahlen werden fortlaufend neu ermittelt und für das Bremsverfahren 102 verwendet. Alternativ oder zusätzlich werden die Raddrehzahlen unabhängig vom Bremsverfahren 102, beispielsweise für Entfernungsmessungen, am Fahrzeug 1 verwendet.

Alle in der vorstehenden Beschreibung und in den Ansprüchen genannten Merkmale sind sowohl einzeln als auch in beliebiger Kombination miteinander einsetzbar. Die Offenbarung der Erfindung ist somit nicht auf die beschriebenen bzw. beanspruchten Merkmalskombinationen beschränkt. Vielmehr sind alle Kombinationen von Merkmalen als offenbart zu betrachten.

## Patentansprüche

1. Bremsanlage für ein Fahrzeug (1), wobei die Bremsanlage (2) mehrere Bremsen (16, 18, 20, 22) zum Abbremsen und/oder Feststellen von Rädern (4, 6, 8, 10) des Fahrzeugs (1) aufweist, mehrere Sensorvorrichtungen (36, 38, 40, 42), zur Drehzahlmessung an den Rädern (4, 6, 8, 10) aufweist und eine signalübertragend mit den Sensorvorrichtungen (36, 38, 40, 42) verbundene Bremselektronik (36) zur Steuerung und/oder Regelung der Bremsen (16, 18, 20, 22) unter Berücksichtigung von Signalen der Sensorvorrichtungen (36, 38, 40, 42) aufweist, wobei wenigstens eine Sensorvorrichtung (40, 42) der Sensorvorrichtungen (36, 38, 40, 42) einen passiven, insbesondere induktiven, Sensor (66, 68) zum passiven Abtasten der Drehung des Polrades (62, 64) aufweist, wobei wenigstens eine Sensorvorrichtung (38, 40) einen Sensorträger (46, 50), insbesondere Stab, mit einem Sensor (82, 84) aufweist, wobei der Sensorträger (46, 50) im Bereich des Rades (4, 6), insbesondere in einer Halteöffnung (78, 80), klemmbar ist zum Abtasten der Drehung eines mit dem Rad (4, 6) mitdrehenden Polrades (58, 60) mittels des Sensors (82, 84) zur Drehzahlmessung, wobei der Sensor (82, 84) ein aktiver Sensor zum aktiven Abtasten der Drehung des Polrades (58, 60) ist, wobei der Sensorträger (46) längs seiner Sensorträgerachse (88), insbesondere Stabachse, verschiebbar klemmbar ist und der Sensorträger (46) radialsymmetrisch um die Sensorträgerachse (88) ausgebildet ist und somit lageunabhängig in Bezug auf Drehungen um die Sensorträgerachse (88) zum Abtasten der Drehung des Polrades (58) klemmbar ist.

2. Bremsanlage nach Anspruch 1,
**dadurch gekennzeichnet, dass**
der Sensorträger (46) mittels einer Klemmbuchse (86), insbesondere in der Halteöffnung (78, 80), zum Abtasten der Drehung des Polrades(58) klemmbar ist.

3. Bremsanlage nach einem der vorherigen Ansprüche,
**dadurch gekennzeichnet, dass**
der aktive Sensor (82) passive Aufnehmer aufweist, deren elektrische Eigenschaften in Abhängigkeit von einem durch die Stellung des Polrades (58) zu den passiven Aufnehmern beeinflussbaren Magnetfeld an den passiven Aufnehmern veränderlich und zur Drehzahlmessung auswertbar sind, und eine Primärelektronik aufweist, die zur Auswertung der elektrischen Eigenschaften der passiven Aufnehmer eine Hilfsspannung benötigt.

4. Fahrzeug mit einer Bremsanlage (2) nach Anspruch 1 bis 3.

5. Fahrzeug nach Anspruch 4, wobei das Fahrzeug (1) wenigstens eine erste Achse (12), insbesondere Vorderachse, mit wenigstens einem ersten Rad (4, 6), insbesondere Vorderrad, aufweist, in dessen Bereich ein Sensorträger (46, 50) einer Sensorvorrichtung (38, 40) nach einem der Ansprüche 1 bis 4 mit einem aktiven Sensor (82, 84) zur Drehzahlmessung des ersten Rades (4, 6) angeordnet ist, und wenigstens eine zweite Achse (14), insbesondere Hinterachse, mit wenigstens einem zweiten Rad (8, 10), insbesondere Hinterrad, aufweist, in dessen Bereich ein weiterer Sensorträger (54, 56) einer weiteren Sensorvorrichtung (42, 44), insbesondere ein weiterer Stab eines weiteren Stabsensors, mit einem passiven Sensor (66, 68) zur Drehzahlmessung des zweiten Rades (8, 10) angeordnet ist.

6. Bremsverfahren zum Abbremsen und/oder Feststellen mehrerer Räder (4, 6, 8, 10) eines Fahrzeugs (1) mittels einer Bremsanlage (2) nach Anspruch 1 bis 3, wobei mittels mehreren Sensorvorrichtungen (38, 40, 42, 44) Signale von den Sensorvorrichtungen (38, 40, 42, 44) an die Bremselektronik (36) übertragen werden und die Bremselektronik (36) die Bremsen (16, 18, 20, 22) unter Berücksichtigung dieser Signale steuert und/oder regelt (118).

7. Bremsverfahren nach Anspruch 6,
**dadurch gekennzeichnet, dass**
die Drehzahl eines ersten Rades (4, 6), insbesondere Vorderrades, einer ersten Achse (12), insbesondere Vorderachse, des Fahrzeugs (1) mittels eines aktiven Sensors (82, 84) eines im Bereich dieses ersten Rades (4, 6) angeordneten Sensorträgers (46, 50) einer Sensorvorrichtung (38, 40) einer Bremsanlage nach einem der Ansprüche 1 bis 3 gemessen wird und die Drehzahl eines zweiten Rades (8, 10), insbesondere Hinterrades, einer zweiten Achse (14), insbesondere Hinterachse, des Fahrzeugs (1) mittels eines passiven Sensors (66, 68) eines im Bereich dieses zweiten Rades (8, 10) angeordneten weiteren Sensorträgers (54, 56) einer weiteren Sensorvorrichtung (42, 44) gemessen wird.

## Claims

1. Brake system for a vehicle (1), wherein the brake system (2) has a plurality of brakes (16, 18, 20, 22) for braking and/or arresting wheels (4, 6, 8, 10) of the vehicle (1), a plurality of sensor devices (36, 38, 40, 42) for measuring the rotational speed at the wheels (4, 6, 8, 10) and signal-transmitting brake electronics (36) which are connected to the sensor devices (36, 38, 40, 42) and are for the purpose of performing open-loop and/or closed-loop control of the brakes (16, 18, 20, 22) taking into account signals of the sensor devices (36, 38, 40, 42), wherein at least one sensor device (40, 42) of the sensor devices (36, 38, 40, 42) has a passive, in particular inductive, sensor (66, 68) for passively sensing the rotation of the pole wheel (62, 64), wherein at least one sensor device (38, 40) has a sensor carrier (46, 50), in particular a rod, having a sensor (82, 84), wherein the sensor carrier (46, 50) can be clamped in the region of the wheel (4, 6), in particular in a securing opening (78, 80), in order to sense the rotation of a pole wheel (58, 60), rotating along with the wheel (4, 6), by means of the sensor (82, 84) for measuring the rotational speed, wherein the sensor (82, 84) is an active sensor for actively sensing the rotation of the pole wheel (58, 60), wherein the sensor carrier (46) can be clamped so as to be displaceable along its sensor carrier axis (88), in particular a rod axis, and the sensor carrier (46) is embodied in a radially symmetrical fashion about the sensor carrier axis (88) and can therefore be clamped independently of position with respect to rotations about the sensor carrier axis (88) in order to sense the rotation of the pole wheel (58).

2. Brake system according to Claim 1,
**characterized in that**
the sensor carrier (46) can be clamped by means of a clamping bushing (86), in particular in the securing opening (78, 80), in order to sense the rotation of the pole wheel (58).

3. Brake system according to one of the preceding claims,
**characterized in that**
the active sensor (82) has passive pickups whose electrical properties are variable in accordance with a magnetic field at the passive pickups which can be influenced by the position of the pole wheel (58) with respect to passive pickups, and which electrical properties can be evaluated in order to measure the rotational speed, and primary electronics which require an auxiliary voltage in order to evaluate the electrical properties of the passive pickups.

4. Vehicle having a brake system (2) according to Claims 1 to 3.

5. Vehicle according to Claim 4, wherein the vehicle (1) has at least a first axle (12), in particular a front axle, having at least one first wheel (4, 6), in particular a front wheel, in the region of which a sensor carrier (46, 50) of a sensor device (38, 40) according to one of Claims 1 to 4 with an active sensor (82, 84) for measuring the rotational speed of the first wheel (4, 6) is arranged, and at least one second axle (14), in particular a rear axle, having at least one second wheel (8, 10), in particular a rear wheel, in the region of which a further sensor carrier (54, 56) of a further sensor device (42, 44), in particular a further rod of a further rod sensor, with a passive sensor (66, 68) for measuring the rotational speed of the second wheel (8, 10) is arranged.

6. Braking method for braking and/or arresting a plurality of wheels (4, 6, 8, 10) of a vehicle (1) by means of a brake system (2) according to Claims 1 to 3, wherein signals from the sensor devices (38, 40, 42, 44) are transmitted to the brake electronics (36) by means of a plurality of sensor devices (38, 40, 42, 44), and the brake electronics (36) performs open-loop and/or closed-loop control (118) of the brakes (16, 18, 20, 22) taking into account these signals.

7. Braking method according to Claim 6,
**characterized in that**
the rotational speed of a first wheel (4, 6), in particular of a front wheel, of a first axle (12), in particular of a front axle, of the vehicle (1) is measured by means of an active sensor (82, 84) of a sensor carrier (46, 50), arranged in the region of this first wheel (4, 6), of a sensor device (38, 40) of a brake system according to one of Claims 1 to 3 and the rotational speed of a second wheel (8, 10), in particular of a rear wheel, of a second axle (14), in particular of a rear axle, of the vehicle (1) is measured by means of a passive sensor (66, 68) of a further sensor carrier (54, 56), arranged in the region of this second wheel (8, 10), of a further sensor device (42, 44) .

## Revendications

1. Système de freinage pour un véhicule (1), le système de freinage (2) comportant plusieurs freins (16, 18, 20, 22) destinés à freiner et/ou à bloquer des roues (4, 6, 8, 10) du véhicule (1), comportant plusieurs dispositifs de capteur (36, 38, 40, 42) pour mesurer la vitesse de rotation des roues (4, 6, 8, 10) et comportant une électronique de freinage (36) reliée en transmission de signal aux dispositifs de capteur (36, 38, 40, 42) pour commander et/ou réguler les freins (16, 18, 20, 22) en tenant compte de signaux des dispositifs de capteur (36, 38, 40, 42), au moins un dispositif de capteur (40, 42) parmi les dispositifs de capteur (36, 38, 40, 42) étant un capteur passif (66, 68), en particulier inductif, destiné au contrôle passif de la rotation de la roue polaire (62, 64), au moins un dispositif de capteur (38, 40) comportant un support de capteur (46, 50), en particulier une barre, doté d'un capteur (82, 84), le support de capteur (46, 50) étant serrable dans la zone de la roue (4, 6), en particulier dans une ouverture de maintien (78, 80), afin de contrôler la rotation d'une roue polaire (58, 60) en rotation conjointe avec la roue (4, 6) au moyen du capteur (82, 84) pour mesurer la vitesse de rotation, le capteur (82, 84) étant un capteur actif destiné au contrôle actif de la rotation de la roue polaire (58, 60), le support de capteur (46) étant serrable en coulissement le long de son axe de support de capteur (88), en particulier son axe de barre, et le support de capteur (46) étant réalisé en symétrie radiale autour de l'axe de support de capteur (88) et étant ainsi serrable autour de l'axe de support de capteur (88) indépendamment de sa position par rapport aux rotations afin de contrôler la rotation de la roue polaire (58).

2. Système de freinage selon la revendication 1, **caractérisé en ce que** le support de capteur (46) est serrable au moyen d'une douille de serrage (86), en particulier dans l'ouverture de maintien (78, 80), afin de contrôler la rotation de la roue polaire (58).

3. Système de freinage selon l'une des revendications précédentes, **caractérisé en ce que** le capteur actif (82) comporte des détecteurs passifs, dont les propriétés électriques sont variables en fonction d'un champ magnétique sur les détecteurs passifs modulable par la position de la roue polaire (58) par rapport aux détecteurs passifs et sont évaluables afin de mesurer la vitesse de rotation, et comporte une électronique primaire, laquelle nécessite une tension auxiliaire pour l'évaluation des propriétés électriques des détecteurs passifs.

4. Véhicule doté d'un système de freinage (2) selon l'une des revendications 1 à 3.

5. Véhicule selon la revendication 4, dans lequel le véhicule (1) comporte au moins un premier essieu (12), en particulier un essieu avant, doté d'au moins une première roue (4, 6), en particulier une roue avant, dans la zone de laquelle est agencé un support de capteur (46, 50) d'un dispositif de capteur (38, 40) selon l'une des revendications 1 à 4, doté d'un capteur actif (82, 84) destiné à mesurer la vitesse de rotation de la première roue (4, 6), et comporte au moins un deuxième essieu (14), en particulier un essieu arrière, doté d'au moins une deuxième roue (8, 10), en particulier une roue arrière, dans la zone de laquelle est agencé un support de capteur supplémentaire (54, 56) d'un dispositif de capteur supplémentaire (42, 44), en particulier une barre supplémentaire d'une sonde supplémentaire, doté d'un capteur passif (66, 68) destiné à mesurer la vitesse de rotation de la deuxième roue (8, 10).

6. Procédé de freinage destiné à freiner et/ou à bloquer plusieurs roues (4, 6, 8, 10) d'un véhicule (1) au moyen d'un système de freinage (2) selon la revendication 1 à 3, dans lequel au moyen de plusieurs dispositifs de capteur (38, 40, 42, 44) des signaux sont transmis des dispositifs de capteur (38, 40, 42, 44) à l'électronique de freinage (36) et l'électronique de freinage (36) commande et/ou régule (118) les freins (16, 18, 20, 22) en tenant compte de ces signaux.

7. Procédé de freinage selon la revendication 6, **caractérisé en ce que** la vitesse de rotation d'une première roue (4, 6), en particulier d'une roue avant, d'un premier essieu (12), en particulier d'un essieu avant, du véhicule (1) est mesurée au moyen d'un capteur actif (82, 84) d'un support de capteur (46, 50), agencé dans la zone de cette première roue (4, 6), d'un dispositif de capteur (38, 40) d'un système de freinage selon l'une des revendications 1 à 3 et la vitesse de rotation d'une deuxième roue (8, 10), en particulier d'une roue arrière, d'un deuxième essieu (14), en particulier d'un essieu arrière, du véhicule (1) est mesurée au moyen d'un capteur passif (66, 68) d'un support de capteur supplémentaire (54, 56), agencé dans la zone de cette deuxième roue (8, 10), d'un dispositif de capteur deuxième (42, 44).
